# EUROPEAN PATENT APPLICATION

(11) **EP 4 700 221 A1**
(43) Date of publication of application: **25.02.2026**
(21) Application number: 25196880.6
(22) Date of filing: 19.08.2025
(51) Int. Cl.: F02D 19/02, F02D 19/06, F02D 41/00, F02M 21/02

(54) **PRESSURE REGULATION METHOD, APPARATUS, VEHICLE, MEDIUM, AND PROGRAM PRODUCT**

(30) Priority: 20.08.2024 CN 202411139465
(71) Applicant: Weichai Power Co., Ltd., 261061 Weifang, Shandong (CN)
(72) Inventor: LI, Xucong, Weifang, 261061 (CN); ZENG, Xiaoxiao, Weifang, 261061 (CN); MA, Fei, Weifang, 261061 (CN); LUO, Changzeng, Weifang, 261061 (CN); LIU, Shitong, Weifang, 261061 (CN)
(74) Representative: Bayramoglu et al.

(57) **Abstract**

The present application relates to the technical field of engine control, and specifically to a pressure regulation method, an apparatus, a vehicle, a medium, and a program product. The method includes: determining current operating condition of an engine during vehicle's driving process; determining a required injection pressure value for the engine based on the current operating condition; determining a target pressure reduction pipeline from multiple pressure reduction pipelines based on the injection pressure value; and connecting the target pressure reduction pipeline with the electronic pressure regulating valve by adjusting a connecting valve. By using the above method, the natural gas can be stabilized within a certain pressure range after passing through the target pressure reduction pipeline, thereby avoiding the problem of excessive temperature drop caused by excessive pressure change of the natural gas behind the electronic pressure regulating valve, which may lead to damage to the electronic pressure regulating valve.

## Description

### TECHNICAL FIELD

The present application relates to the technical field of engine control, and specifically to a pressure regulation method, an apparatus, a vehicle, a medium, and a program product.

### BACKGROUND

The in-cylinder direct injection combustion technology of natural gas adopts a natural gas high-pressure common rail electronic control injection system, which allows the engine to flexibly control the quality of mixed gas in the cylinder by adjusting parameters such as injection pressure, injection timing, and injection pulse width of the natural gas. This relies on the way of forming the injected mixed gas, improves the charging efficiency, reduces the formation of near wall mixed gas, improves the knocking phenomenon of premixed natural gas combustion, and reduces hydrocarbon (HC) emissions. A compression ratio higher than that of traditional non-direct injection natural gas engines can be adopted, which significantly improves the power and thermal efficiency of natural gas engines, making them become excellent low-carbon emission power and achieving breakthroughs in carbon neutrality.

The above gas supply method of the in-cylinder high-pressure direct injection natural gas engine is to pressurize the natural gas in a liquefied natural gas tank and supply it to an electronic pressure regulating valve. The electronic pressure regulating valve reduces the pressure of the natural gas according to the vehicle load before injection. The pressure reduction process is achieved by "vaporizing the liquefied natural gas". If the pressure of natural gas changes too much, such as from 580 bar to 280 bar, it will cause a very large temperature drop at the electronic pressure regulating valve, which may lead to a fault in the electronic pressure regulating valve.

### SUMMARY

The present application provides a pressure regulation method, an apparatus, a vehicle, a medium, and a program product, which can ensure that the temperature drop at the electronic pressure regulating valve will not be too large, thereby ensuring normal operation of the electronic pressure regulating valve.

In a first aspect, an embodiment of the present application provides a pressure regulation method, which includes:
determining current operating condition of an engine during vehicle's driving process;
determining a required injection pressure value for the engine based on the current operating condition, which is a pressure value obtained by reducing the pressure of natural gas through an electronic pressure regulating valve of the engine;
determining a target pressure reduction pipeline from multiple pressure reduction pipelines based on the injection pressure value; where the pressure reduction pipelines are located between a liquefied natural gas tank of the engine and the electronic pressure regulating valve, and are used to adjust a pressure value of the natural gas in front of the electronic pressure regulating valve; each of the pressure reduction pipelines includes a stabilizing tank, and stabilizing pressure values of the stabilizing tanks on different pressure reduction pipelines are different; and
connecting the target pressure reduction pipeline with the electronic pressure regulating valve by adjusting a connecting valve.

In the above embodiment, the required injection pressure value for the engine is determined based on the current operating condition of the natural gas engine, and then the target pressure reduction pipeline that needs to be connected currently is determined based on the injection pressure value, so that the natural gas can be stabilized within a certain pressure range after passing through the target pressure reduction pipeline, thereby avoiding the problem of excessive temperature drop caused by excessive pressure change of the natural gas behind the electronic pressure regulating valve, which may lead to damage to the electronic pressure regulating valve.

In a possible implementation, the determining a target pressure reduction pipeline from multiple pressure reduction pipelines based on the injection pressure value includes:
determining the target pressure reduction pipeline corresponding to the required injection pressure value for the engine under the current operating condition from a preset mapping relationship between injection pressure values and pressure reduction pipelines.

In the above embodiment, by pre-establishing a mapping relationship between the injection pressure values and the pressure reduction pipelines, the target pressure reduction pipeline can be quickly determined after the injection pressure value is determined.

The connecting the target pressure reduction pipeline with the electronic pressure regulating valve by adjusting a connecting valve includes:
performing fault detection on the target pressure reduction pipeline;
if it is determined that there is a fault in the target pressure reduction pipeline, then determining differences between output pressure values of the remaining pressure reduction pipelines and an output pressure value of the target pressure reduction pipeline, respectively; and
adjusting the connecting valve to open a passage between the pressure reduction pipeline with the smallest difference and the electronic pressure regulating valve and close a passage between the target pressure reduction pipeline and the electronic pressure regulating valve.

In the above embodiment, a solution for switching the pressure reduction pipeline is provided; when it is determined that there is a fault in the target pressure reduction pipeline, a new target pressure reduction pipeline can be selected to ensure smooth transmission of the natural gas in the pipeline.

In a possible implementation, the performing fault detection on the target pressure reduction pipeline includes:
if fault conditions are met, then determining that there is a fault in the target pressure reduction pipeline;
where the fault conditions include some or all of the following:
detecting through a pressure sensor that the current pressure value of the stabilizing tank on the target pressure reduction pipeline is smaller than a preset pressure value;
detecting through a flow sensor that the current gas flow rate in the stabilizing tank on the target pressure reduction pipeline is smaller than a preset gas flow rate; and
detecting through an on/off state indicator that the passage between the target pressure reduction pipeline and the electronic pressure regulating valve is in an off state.

In the above embodiment, multiple conditions are provided to judge whether there is a fault in the target pressure reduction pipeline, making the monitoring of the target pressure reduction pipeline more comprehensive and enabling timely detection of the problem in the target pressure reduction pipeline.

In a possible implementation, there are two pressure reduction pipelines, and the connecting valve is a three-way valve; and
the connecting the target pressure reduction pipeline with the electronic pressure regulating valve by adjusting a connecting valve includes:
when it is determined that the engine is currently in a high load operating condition, adjusting the three-way valve to connect the target pressure reduction pipeline having a first output pressure value with the electronic pressure regulating valve and disconnect the pressure reduction pipeline having a second output pressure value from the electronic pressure regulating valve; and
when it is determined that the engine is currently in a low load operating condition, adjusting the three-way valve to connect the target pressure reduction pipeline having the second output pressure value with the electronic pressure regulating valve and disconnect the pressure reduction pipeline having the first output pressure value from the electronic pressure regulating valve;
where the first output pressure value is larger than the second output pressure value.

In the above embodiment, two pressure reduction pipelines are provided, which not only avoids excessive pressure change of the natural gas in front of and behind the electronic pressure regulating valve, but also ensures low cost.

In a possible implementation, the current operating condition of the engine is determined in the following way:
if it is determined that the current torque of the engine is larger than a preset torque, then determining that the engine is currently in the high load operating condition; and
if it is determined that the current torque of the engine is not larger than the preset torque, then determining that the engine is currently in the low load operating condition.

In the above embodiment, the operating conditions of the engine are divided into two types based on the torque, namely, the high load operating condition and the low load operating condition. The target pressure reduction pipeline can be further determined based on the operating conditions to ensure the normal operation of the electronic pressure regulating valve.

In a second aspect, an embodiment of the present application provides a pressure regulating device, which includes:
an operating condition determination module, which is configured to determine current operating condition of an engine during vehicle's driving process;
an injection pressure determination module, which is configured to determine a required injection pressure value for the engine based on the current operating condition, which is a pressure value obtained by reducing the pressure of natural gas through an electronic pressure regulating valve of the engine;
a pipeline determination module, which is configured to determine a target pressure reduction pipeline from multiple pressure reduction pipelines based on the injection pressure value; where the pressure reduction pipelines are located between a liquefied natural gas tank of the engine and the electronic pressure regulating valve, and are used to adjust a pressure value of the natural gas in front of the electronic pressure regulating valve; each of the pressure reduction pipelines includes a stabilizing tank, and stabilizing pressure values of the stabilizing tanks on different pressure reduction pipelines are different; and
an adjustment module, which is configured to connect the target pressure reduction pipeline with the electronic pressure regulating valve by adjusting a connecting valve.

In a third aspect, an embodiment of the present application provides an electronic device, which includes:
at least one processor; and a memory in communication with the at least one processor; where the memory stores instructions that can be executed by the at least one processor, and the instructions are executed by the at least one processor so that the at least one processor can perform the method as described in the first aspect above.

In a fourth aspect, an embodiment of the present application provides a vehicle, which includes the electronic device as described in the third aspect above.

In a fifth aspect, an embodiment of the present application provides a computer storage medium on which a computer program is stored for causing a computer to perform the method as described in the first aspect above.

In a sixth aspect, an embodiment of the present application provides a computer program product that implements the method as described in the first aspect above when the computer program is executed by a processor.

### BRIEF DESCRIPTION OF THE DRAWINGS

FIG. 1 is a schematic structural diagram of a natural gas engine according to an exemplary embodiment of the present disclosure;
FIG. 2 is a schematic flowchart of a pressure regulation method according to an exemplary embodiment of the present disclosure;
FIG. 3 is a schematic diagram of operating condition differentiation according to an exemplary embodiment of the present disclosure;
FIG. 4 is a schematic diagram of a pressure regulating device according to an exemplary embodiment of the present disclosure;
FIG. 5 is a schematic diagram of an electronic device according to an exemplary embodiment of the present disclosure; and
FIG. 6 is a schematic diagram of a vehicle according to an exemplary embodiment of the present disclosure.

### DETAILED DESCRIPTION

In order to make the objects, technical solutions and advantages of the present application more clearly understood, the technical solutions in the embodiments of the present application will be clearly and fully described below with reference to the accompanying drawings in the embodiments of the present application. Obviously, the described embodiments are only some embodiments of the present application, not all of them. Based on the embodiments of the present application, all other embodiments obtained by those skilled in the art without creative efforts are all within the scope of protection of the present application. Without conflicts, the embodiments of the present application and features in the embodiments can be combined arbitrarily with each other. Moreover, although a logical sequence is shown in the flowchart, in some cases, the steps shown or described may be executed in different orders.

The acquisition, storage, use and processing of data in the embodiments of the present application all comply with relevant provisions of national laws and regulations.

Firstly, some of the concepts involved in the embodiments of the present application will be introduced.

Natural gas engine: an engine fueled by natural gas, also known as a spark ignition engine, in which natural gas is ignited by diesel oil.

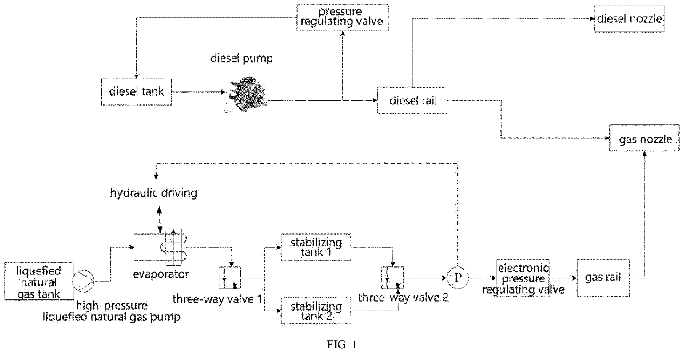

The structure of the natural gas engine provided in the embodiments of the present application is shown in FIG. 1. There are two pipelines in this structure, namely, a diesel pipeline and a natural gas pipeline. The diesel pipeline includes a diesel tank, a diesel pump, a pressure regulating valve, a diesel rail, and a diesel nozzle; the natural gas pipeline includes a liquefied natural gas tank, a high-pressure liquefied natural gas pump, an evaporator, two three-way valves, multiple stabilizing tanks, an electronic pressure regulating valve, a gas rail, and a gas nozzle. The pressure of natural gas output from the stabilizing tank can drive the evaporator.

Pressure reduction pipeline: in FIG. 1, a pressure reduction pipeline 1 is three-way valve 1→stabilizing tank 1→three-way valve 2, while a pressure reduction pipeline 2 is three-way valve 1→stabilizing tank 2-three-way valve 2. In the embodiment of the present application, more pressure reduction pipelines can be provided, on each of which multiple stabilizing tanks are connected. The embodiment of the present application provides two pressure reduction pipelines, on each of which one stabilizing tank is provided, which can save costs while solving the technical problems. The numbers of pressure reduction pipelines and stabilizing tanks are not specifically limited herein.

Stabilizing tank: which is used to maintain the pressure value of natural gas at a stabilizing pressure value of the stabilizing tank. For example, if the pressure intensity of the stabilizing tank is 500 bar, then the pressure intensity of natural gas output from the stabilizing tank will also be 500 bar. It should be noted that "bar" is a unit of pressure intensity, and the pressure intensity can be further converted into pressure to describe the stabilizing performance of the stabilizing tank.

Stabilizing pressure value: which is used to represent the pressure value of natural gas output from the stabilizing tank.

Injection pressure value: which is a pressure value obtained by reducing the pressure of natural gas through an electronic pressure regulating valve of the engine. In FIG. 1, the injection pressure value is the pressure value of natural gas located behind the electronic pressure regulating valve.

Output pressure value: which is used to represent the pressure value of natural gas output from the pressure reduction pipeline, that is, the pressure value of natural gas after passing through the last stabilizing tank in the pressure reduction pipeline.

Pressure sensor: which is used to detect the gas pressure in the stabilizing tank.

Flow sensor: which is used to detect the gas flow rate in the stabilizing tank.

Torque sensor: which is used to collect the torque of the engine.

The pressure regulation method in the embodiment of the present application will be described in detail below with reference to the accompanying drawings.

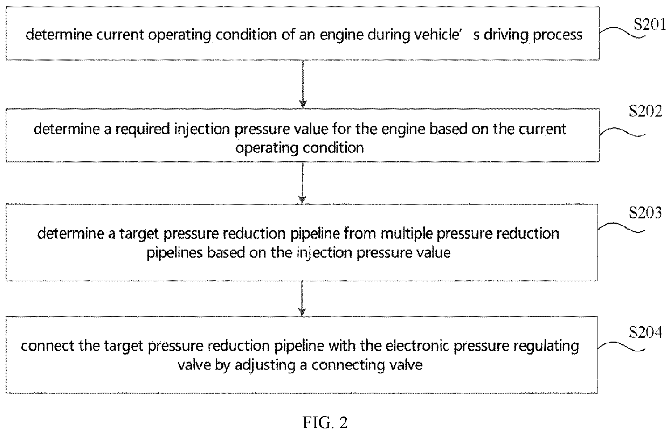

In view of the problem of damage caused by excessive pressure drop at the electronic pressure regulating valve in the prior art, the embodiment of the present application provides a pressure regulation method; as shown in FIG. 2, this method includes the following steps S201-S204.

S201: determining current operating condition of an engine during vehicle's driving process.

In the embodiment of the present application, the operating conditions of the engine can be divided into a high load operating condition and a low load operating condition based on the magnitude of torque.

If it is determined that the current torque of the engine is larger than a preset torque, then it is determined that the engine is currently in the high load operating condition; and if it is determined that the current torque of the engine is not larger than the preset torque, then it is determined that the engine is currently in the low load operating condition. The above-mentioned preset torque is pre-calibrated, and the embodiment of the present application does not specifically limit the magnitude of the preset torque.

In addition, the embodiment of the present application may only include two operating conditions, and the operating conditions of the engine may be further divided into multiple operating conditions based on the magnitude of torque. Herein, the category of operating conditions is not specifically limited.

S202: determining a required injection pressure value for the engine based on the current operating condition.

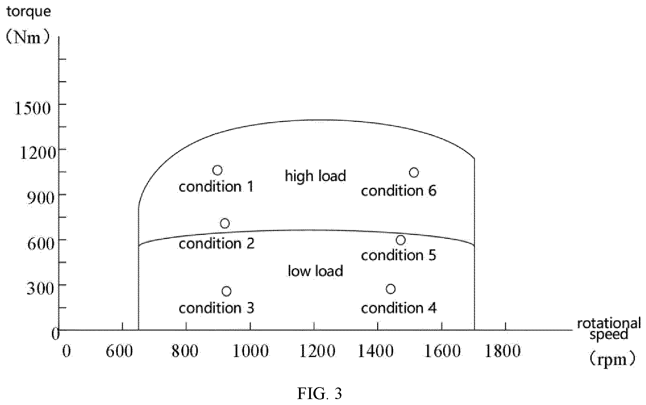

As shown in FIG. 3, the operating conditions can be Condition 1, Condition 2, Condition 3, Condition 4, Condition 5, and Condition 6. Condition 1, Condition 2, and Condition 6 belong to the high load operating condition, while Condition 3, Condition 4, and Condition 5 belong to the low load operating condition.

The injection pressure value is a pressure value obtained by reducing the pressure of natural gas through the electronic pressure regulating valve of the engine, and the injection pressure values corresponding to different operating conditions are different. During implementation, a mapping relationship between the operating conditions and the injection pressure values can be pre-established. For example, the injection pressure value corresponding to the high load operating conditions is P1, and the injection pressure value corresponding to the low load operating conditions is P2. After determining that the current operating condition is the low load operating condition, the current required injection pressure value for the engine can be determined as P2 based on the above mapping relationship between the operating conditions and the injection pressure values.

S203: determining a target pressure reduction pipeline from multiple pressure reduction pipelines based on the injection pressure value.

Taking FIG. 1 as an example, based on the characteristics of natural gas engines, the pressure value of natural gas in front of the three-way valve 1 is relatively high. Under different operating conditions, the injection pressure values of natural gas behind the electronic pressure regulating valve are different. If the pressure value of natural gas in front of the electronic pressure regulating valve is significantly different from the injection pressure value of natural gas behind the electronic pressure regulating valve, there may be a phenomenon of excessive temperature drop at the electronic pressure regulating valve, which may further cause a fault in the electronic pressure regulating valve. In order to avoid the fault in the electronic pressure regulating valve, it is necessary to determine a target pressure reduction pipeline based on the injection pressure value. After the natural gas passes through the target pressure reduction pipeline, the pressure value of natural gas will be reduced, so that the difference between the pressure value of natural gas in front of the electronic pressure regulating valve and the injection pressure value of natural gas behind the electronic pressure regulating valve becomes smaller, so as to solve the problem of excessive temperature drop at the electronic pressure regulating valve which causes fault. The pressure reduction pipelines are located between the liquefied natural gas tank of the engine and the electronic pressure regulating valve, and are used to adjust the pressure value of the natural gas in front of the electronic pressure regulating valve; each of the pressure reduction pipelines includes a stabilizing tank, and stabilizing pressure values of the stabilizing tanks on different pressure reduction pipelines are different.

In a possible implementation, the target pressure reduction pipeline can be selected in the following way:
determining the target pressure reduction pipeline corresponding to the required injection pressure value for the engine under the current operating condition from a preset mapping relationship between injection pressure values and pressure reduction pipelines.

Taking the two pressure reduction pipelines shown in FIG. 1 as an example, the injection pressure value P1 corresponds to the pressure reduction pipeline where stabilizing tank 1 is located, and the injection pressure value P2 corresponds to the pressure reduction pipeline where stabilizing tank 2 is located. When the injection pressure value is determined as P1, the target pressure reduction pipeline is determined as the pressure reduction pipeline where stabilizing tank 1 is located.

S204: connecting the target pressure reduction pipeline with the electronic pressure regulating valve by adjusting a connecting valve.

In the embodiment of the present application, the connecting valve can be a three-way valve or another type of valve; it can be arranged only at the beginning of the pressure reduction pipeline, or arranged at the beginning and end of the pressure reduction pipeline respectively; herein, there are no specific limitations on the type and position of the connecting valve. As shown in FIG. 1, there are two pressure reduction pipelines, each of which includes one stabilizing tank. The pressure intensity of stabilizing tank 1 is 500 bar, and the pressure intensity of stabilizing tank 2 is 300 bar. The three-way valves are arranged at the beginning and end of the pressure reduction pipelines respectively, that is, they are arranged in front of and behind the stabilizing tanks respectively. The pressure intensity of the stabilizing tank is pre-calibrated based on the characteristics of the natural gas engine, and is not specifically limited in the embodiment of the present application.

Taking FIG. 1 as an example, by adjusting the three-way valve, the target pressure reduction pipeline is connected to the electronic pressure regulating valve, including any of the following.
(1) When it is determined that the engine is currently in the high load operating condition, the three-way valve is adjusted to connect the target pressure reduction pipeline having a first output pressure value with the electronic pressure regulating valve, and to disconnect the pressure reduction pipeline having a second output pressure value from the electronic pressure regulating valve.
   For example, when it is determined that the engine is currently in the high load operating condition, the three-way valve is adjusted to connect the pressure reduction pipeline where the 500 bar stabilizing tank is located with the electronic pressure regulating valve, and to disconnect the pressure reduction pipeline where the 300 bar stabilizing tank is located from the electronic pressure regulating valve.
(2) When it is determined that the engine is currently in the low load operating condition, the three-way valve is adjusted to connect the target pressure reduction pipeline having the second output pressure value with the electronic pressure regulating valve, and to disconnect the pressure reduction pipeline having the first output pressure value from the electronic pressure regulating valve.

For example, when it is determined that the engine is currently in the low load operating condition, the three-way valve is adjusted to connect the pressure reduction pipeline where the 300 bar stabilizing tank is located with the electronic pressure regulating valve, and to disconnect the pressure reduction pipeline where the 500 bar stabilizing tank is located from the electronic pressure regulating valve.

In a possible implementation, real-time fault detection is performed on each of the pressure reduction pipelines separately. If a fault is detected in the target pressure reduction pipeline after the target pressure reduction pipeline is determined, regardless of whether the current target pressure reduction pipeline is connected or not, it needs to be switched to another pressure reduction pipeline through the connecting valve. Other pressure reduction pipelines can be selected in the following way:
determining differences between output pressure values of the remaining pressure reduction pipelines and an output pressure value of the target pressure reduction pipeline, respectively; and adjusting the connecting valve to open a passage between the pressure reduction pipeline with the smallest difference and the electronic pressure regulating valve and close a passage between the target pressure reduction pipeline and the electronic pressure regulating valve.

For example, the output pressure values of five pressure reduction pipelines are P3, P4, P5, P6 and P7 respectively, and the output pressure value of the target pressure reduction pipeline is P3, which has the smallest difference from P4. When it is determined that there is a fault in the target pressure reduction pipeline, the pressure reduction pipeline with the output pressure value of P4 is reselected as the target pressure reduction pipeline and connected through the connecting valve.

If only two pressure reduction pipelines are included, as shown in FIG. 1, when a fault is detected in the pressure reduction pipeline where stabilizing tank 1 is located, it is determined to use the pressure reduction pipeline where stabilizing tank 2 is located; and when a fault is detected in the pressure reduction pipeline where stabilizing tank 2 is located, it is determined to use the pressure reduction pipeline where stabilizing tank 1 is located.

In a possible implementation, fault detection of the target pressure reduction pipeline may include some or all of the following.
(1) When it is detected through a pressure sensor that the current pressure value of the stabilizing tank on the target pressure reduction pipeline is smaller than a preset pressure value, it is determined that there is a fault in the target pressure reduction pipeline.
   For example, for the 500 bar stabilizing tank, a pressure sensor is installed inside the tank to monitor the pressure value in the stabilizing tank in real time. When the current pressure value is detected to be smaller than 500 bar, it is determined that there is a fault in the target pressure reduction pipeline. Due to the error in the detection by the pressure sensor, the preset pressure value may be slightly smaller than 500 bar, such as 495 bar. That is, if the current pressure of the stabilizing tank is detected to be between 495 bar and 500 bar, it can be judged that the stabilizing tank is normal, that is, the target pressure reduction pipeline is normal.
(2) When it is detected through a flow sensor that the current gas flow rate in the stabilizing tank on the target pressure reduction pipeline is smaller than a preset gas flow rate, it is determined that there is a fault in the target pressure reduction pipeline.

Due to the working principle of the stabilizing tank, the fluctuating gas flow entering the tank body is buffered, reduced, or eliminated to ensure stable collective pressure during engine operation and prevent accidents. Different stabilizing tanks have different buffering effects on the gas flow, that is, the gas flow rates inside different stabilizing tanks are different.

For example, for the 500 bar stabilizing tank, a flow sensor is installed inside the tank to monitor the gas flow rate value inside the stabilizing tank in real time. If the current gas flow rate value is detected to be smaller than Q1, it indicates a decrease in the buffering effect on the gas flow and it can be determined that there is a fault in the target pressure reduction pipeline.

(3) When it is detected through an on/off state indicator that the passage between the target pressure reduction pipeline and the electronic pressure regulating valve is in an off state, it is determined that there is a fault in the target pressure reduction pipeline.

The fault in the stabilizing tank mentioned above can indicate fault in the target pressure reduction pipeline, and in addition to this, "failure to connect the target pressure reduction pipeline" can also indicate a fault in the target pressure reduction pipeline. The on/off state indicator can be connected to the connecting valve. When the electronic control unit sends "open the target pressure reduction pipeline" to the connecting valve, under normal circumstances, the on/off state indicator will feedback a signal indicating the "on state". If the opening fails, the on/off state indicator will feedback a signal indicating the "off state" to the electronic control unit. At this time, the electronic control unit can determine that there is a fault in the target pressure reduction pipeline.

In the pressure reduction pipeline shown in FIG. 1, there are two three-way valves. At this time, it is necessary to receive signals indicating the "on state" from both on/off state indicators simultaneously to determine that the target pressure reduction pipeline is normal. If a signal indicating the "off state" is received from any one of the on/off state indicators, it is determined that there is a fault in the target pressure reduction pipeline.

In addition, it is also possible to determine whether there is a fault in the stabilizing tank by detecting whether there is a fault in a valve (such as a relief valve) on the stabilizing tank, and thus determine whether there is a fault in the target pressure reduction pipeline.

In a possible implementation, after it is determined that there is a fault in the target pressure reduction pipeline, in addition to having to reselect the target pressure reduction pipeline, alarm information can also be generated to prompt the driver to repair the pressure reduction pipeline. The alarm information can be displayed on the display of the intelligent cabin of the vehicle, or the reminder can be in the form of voice broadcast, or the driver can be notified by lighting up the display light, which are not specifically limited in the embodiment of the present application.

The embodiment of the present application provides a pressure regulation method that can determine the target pressure reduction pipeline that needs to be connected currently based on the current operating condition of the natural gas engine, so that the stabilizing tank on the target pressure reduction pipeline can stabilize the pressure of natural gas in the pipeline within a certain range, thereby avoiding the problem of damage to the electronic pressure regulating valve caused by excessive pressure change of the natural gas behind the electronic pressure regulating valve; moreover, when there is a fault in the target pressure reduction pipeline, it can be timely switched to another pressure reduction pipeline to ensure smooth transmission of natural gas, and an alarm can be issued to remind the driver to repair the vehicle in a timely manner.

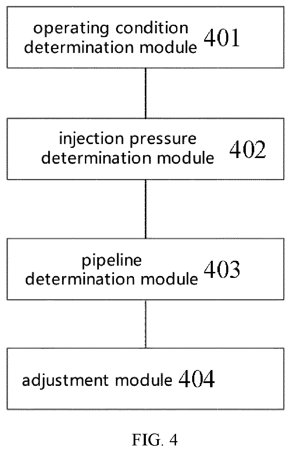

Based on the same inventive concept, an embodiment of the present application also provides a pressure regulating device; as shown in FIG. 4, the device includes:
an operating condition determination module 401, which is configured to determine current operating condition of an engine during vehicle's driving process;
an injection pressure determination module 402, which is configured to determine a required injection pressure value for the engine based on the current operating condition, which is a pressure value obtained by reducing the pressure of natural gas through an electronic pressure regulating valve of the engine;
a pipeline determination module 403, which is configured to determine a target pressure reduction pipeline from multiple pressure reduction pipelines based on the injection pressure value; where the pressure reduction pipelines are located between a liquefied natural gas tank of the engine and the electronic pressure regulating valve, and are used to adjust a pressure value of the natural gas in front of the electronic pressure regulating valve; each of the pressure reduction pipelines includes a stabilizing tank, and stabilizing pressure values of the stabilizing tanks on different pressure reduction pipelines are different; and
an adjustment module 404, which is configured to connect the target pressure reduction pipeline with the electronic pressure regulating valve by adjusting a connecting valve.

In a possible implementation, the pipeline determination module 403 is configured to:
determine the target pressure reduction pipeline corresponding to the required injection pressure value for the engine under the current operating condition from a preset mapping relationship between injection pressure values and pressure reduction pipelines.

In a possible implementation, the adjustment module 403 is configured to:
perform fault detection on the target pressure reduction pipeline;
determine differences between output pressure values of the remaining pressure reduction pipelines and an output pressure value of the target pressure reduction pipeline respectively, if it is determined that there is a fault in the target pressure reduction pipeline; and
adjust the connecting valve to open a passage between the pressure reduction pipeline with the smallest difference and the electronic pressure regulating valve and close a passage between the target pressure reduction pipeline and the electronic pressure regulating valve.

In a possible implementation, the adjustment module 403 is configured to:
determine that there is a fault in the target pressure reduction pipeline when it is detected through a pressure sensor that the current pressure value of the stabilizing tank on the target pressure reduction pipeline is smaller than a preset pressure value, or when it is detected through a flow sensor that the current gas flow rate in the stabilizing tank on the target pressure reduction pipeline is smaller than a preset gas flow rate, or when it is detected through an on/off state indicator that the passage between the target pressure reduction pipeline and the electronic pressure regulating valve is in an off state.

**In** a possible implementation, there are two pressure reduction pipelines, and the connecting valve is a three-way valve; and
the adjustment module 403 is configured to:
when it is determined that the engine is currently in a high load operating condition, adjust the three-way valve to connect the target pressure reduction pipeline having a first output pressure value with the electronic pressure regulating valve and disconnect the pressure reduction pipeline having a second output pressure value from the electronic pressure regulating valve; and
when it is determined that the engine is currently in a low load operating condition, adjust the three-way valve to connect the target pressure reduction pipeline having the second output pressure value with the electronic pressure regulating valve and disconnect the pressure reduction pipeline having the first output pressure value from the electronic pressure regulating valve;
where the first output pressure value is larger than the second output pressure value.

In a possible implementation, the operating condition determination module 401 is configured to determine the current operating condition of the engine in the following way:
if it is determined that the current torque of the engine is larger than a preset torque, then determining that the engine is currently in the high load operating condition; and
if it is determined that the current torque of the engine is not larger than the preset torque, then determining that the engine is currently in the low load operating condition.

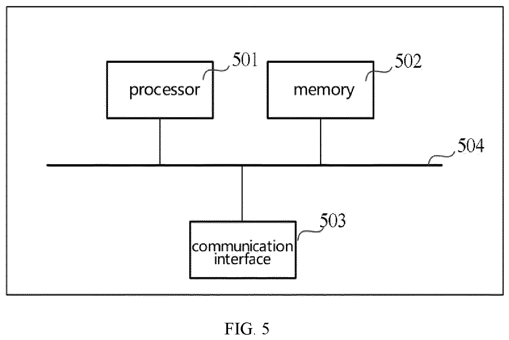

Based on the same inventive concept, an embodiment of the present application also provides an electronic device; as shown in FIG. 5, the electronic device includes:
a processor 501, a memory 502 and a communication interface 503, as well as a bus 504. The processor 501, the memory 502, and the communication interface 503 are interconnected through the bus 504.

The processor 501 is used to read instructions from the memory 502 and execute them, so that at least one processor can perform the pressure regulation method provided in the above embodiment.

The memory 502 is used to store various instructions and programs for the pressure regulation method provided in the above embodiment.

The communication interface 503 is used for data exchange between various sensors, on/off state indicators, other external devices and the electronic control unit.

The bus 504 can be a peripheral component interconnect (PCI) bus or an extended industry standard architecture (EISA) bus, etc. The buses can be divided into address buses, data buses, control buses, etc. For ease of representation, only one thick line is shown in FIG. 5, but it does not indicate that there is only one bus or one type of bus.

The processor 501 can be a central processing unit (CPU), a network processor (NP), a graphic processing unit (GPU), or any combination of CPU, NP and GPU. It can also be a hardware chip. The above-mentioned hardware chip can be an application specific integrated circuit (ASIC), a programmable logic device (PLD), or a combination thereof. The above-mentioned PLD can be a complex programmable logic device (CPLD), a field programmable gate array (FPGA), a generic array logic (GAL), or any combination thereof.

The memory 502 may include readable media in the form of volatile memory, such as a random-access memory (RAM) and/or a cache memory, and may further include a read-only memory (ROM). The memory 502 may further include programs/utilities with a set of (at least one) program modules, including but not limited to: an operating system, one or more application programs, other program modules, and program data; each of these examples or a certain combination thereof may include an implementation of network environment.

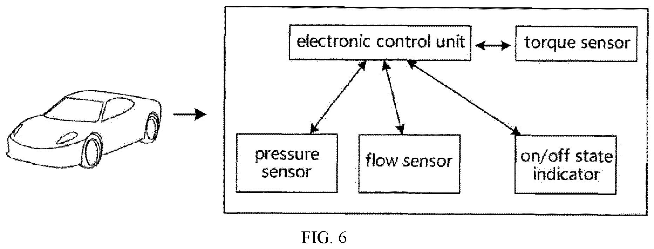

Based on the same inventive concept, an embodiment of the present application also provides a vehicle; as shown in FIG. 6, the vehicle includes:
an electronic control unit, such as the electronic device shown in FIG. 5, which determines the current operating condition of the engine, the values of various sensors, and the state of the on/off state indicator during the vehicle's driving process, and performs the pressure regulation method provided in the embodiment of the present application based on the collected data;
a torque sensor, which is used to collect the torque of the engine and provide feedback to the electronic control unit;
pressure sensors, which are used to collect pressure values of the stabilizing tanks on various pressure reduction pipelines and provide feedback to the electronic control unit;
flow sensors, which are used to collect gas flow rate values of the stabilizing tanks on various pressure reduction pipelines and provide feedback to the electronic control unit; and
an on/off state indicator, which is connected to the connecting valve, and is used to indicate the on/off state of the connecting valve and feedback the on/off state to the electronic control unit.

An embodiment of the present application also provides a computer program product, which includes a computer program that, when executed by a processor, implements any of the above pressure regulation methods. For example, the method described in the present application can be fully or partially implemented through software, hardware, firmware, or any combination thereof. When implemented using software, it can be fully or partially implemented in the form of a computer program product. The computer program product includes one or more computer programs or instructions. When loading and executing the computer programs or instructions on a computer, all or part of the process or function of the present application is executed. The computer can be a general-purpose computer, a special purpose computer, a computer network, a network apparatus, a user device, a core network apparatus, or another programmable device.

Optionally, a computer-readable storage medium can be used as an implementation of the above-mentioned computer program product, that is, an embodiment of the present application also provides a computer-readable storage medium, which includes a computer program that, when executed by a processor, implements any of the pressure regulation methods described above.

For example, computer programs or instructions can be stored in a computer-readable storage medium, or transmitted from one computer-readable storage medium to another. For example, the computer programs or instructions can be transmitted from one website site, computer, server, or data center to another website site, computer, server, or data center in a wired or wireless way. The computer readable storage media can be any available medium accessible to a computer, or a data storage device such as a server or data center in which one or more available media are integrated. The available media can be magnetic media, such as floppy disks, hard disks, and magnetic tapes; or optical media, such as digital video discs; or semiconductor media, such as solid-state drives. The computer-readable storage media can be volatile or non-volatile storage media, or can include both volatile and non-volatile types of storage media.

It can be understood by those skilled in the art that the embodiments of the present application can be provided as methods, systems, or computer program products. Therefore, the present application may take the form of a fully hardware embodiment, a fully software embodiment, or an embodiment combining both software and hardware. Moreover, the present application may take the form of a computer program product implemented on one or more computer usable storage media (including but not limited to disk storage, CD-ROM, optical storage, etc.) containing computer usable program codes.

These computer programs can also be stored in a computer-readable memory that can guide a computer or another programmable data processing device to work in a specific way, causing the instructions stored in the computer-readable memory to produce a manufactured product including an instruction device that implements the functions specified in one or more processes of a flowchart and/or one or more boxes in a block diagram.

These computer program instructions can also be loaded onto a computer or another programmable data processing device, enabling a series of operational steps to be executed on the computer or other programmable device to generate computer implemented processing, so that the instructions executed on the computer or other programmable device provide steps for implementing the functions specified in one or more processes of a flowchart and/or one or more boxes in a block diagram.

Although the preferred embodiments of the present application have been described, those skilled in the art may make additional changes and modifications to these embodiments once they have knowledge of the basic inventive concept. Therefore, the appended claims are intended to be interpreted as including the preferred embodiments and all changes and modifications falling within the scope of the present application.

Obviously, those skilled in the art can make various modifications and variations to the present application without departing from its spirit and scope. In this way, if these modifications and variations to the present application fall within the scope of the claims and equivalent technologies of the present application, the present application is also intended to include these modifications and variations.

## Claims

1. A pressure regulation method, **characterized by** comprising:
determining current operating condition of an engine during vehicle's driving process;
determining a required injection pressure value for the engine based on the current operating condition, which is a pressure value obtained by reducing the pressure of natural gas through an electronic pressure regulating valve of the engine;
determining a target pressure reduction pipeline from multiple pressure reduction pipelines based on the injection pressure value; wherein the pressure reduction pipelines are located between a liquefied natural gas tank of the engine and the electronic pressure regulating valve, and are used to adjust a pressure value of the natural gas in front of the electronic pressure regulating valve; each of the pressure reduction pipelines comprises a stabilizing tank, and stabilizing pressure values of the stabilizing tanks on different pressure reduction pipelines are different; and
connecting the target pressure reduction pipeline with the electronic pressure regulating valve by adjusting a connecting valve.

2. The method according to claim 1, wherein the determining a target pressure reduction pipeline from multiple pressure reduction pipelines based on the injection pressure value comprises:
determining the target pressure reduction pipeline corresponding to the required injection pressure value for the engine under the current operating condition from a preset mapping relationship between injection pressure values and pressure reduction pipelines.

3. The method according to claim 1, wherein the connecting the target pressure reduction pipeline with the electronic pressure regulating valve by adjusting a connecting valve comprises:
performing fault detection on the target pressure reduction pipeline;
if it is determined that there is a fault in the target pressure reduction pipeline, then determining differences between output pressure values of the remaining pressure reduction pipelines and an output pressure value of the target pressure reduction pipeline, respectively; and
adjusting the connecting valve to open a passage between the pressure reduction pipeline with the smallest difference and the electronic pressure regulating valve and close a passage between the target pressure reduction pipeline and the electronic pressure regulating valve.

4. The method according to claim 3, wherein the performing fault detection on the target pressure reduction pipeline comprises:
if fault conditions are met, then determining that there is a fault in the target pressure reduction pipeline;
wherein the fault conditions comprise some or all of the following:
detecting through a pressure sensor that the current pressure value of the stabilizing tank on the target pressure reduction pipeline is smaller than a preset pressure value;
detecting through a flow sensor that the current gas flow rate in the stabilizing tank on the target pressure reduction pipeline is smaller than a preset gas flow rate; and
detecting through an on/off state indicator that the passage between the target pressure reduction pipeline and the electronic pressure regulating valve is in an off state.

5. The method according to claim 1, wherein there are two pressure reduction pipelines, and the connecting valve is a three-way valve; and
the connecting the target pressure reduction pipeline with the electronic pressure regulating valve by adjusting a connecting valve comprises:
when it is determined that the engine is currently in a high load operating condition, adjusting the three-way valve to connect the target pressure reduction pipeline having a first output pressure value with the electronic pressure regulating valve and disconnect the pressure reduction pipeline having a second output pressure value from the electronic pressure regulating valve; and
when it is determined that the engine is currently in a low load operating condition, adjusting the three-way valve to connect the target pressure reduction pipeline having the second output pressure value with the electronic pressure regulating valve and disconnect the pressure reduction pipeline having the first output pressure value from the electronic pressure regulating valve;
wherein the first output pressure value is larger than the second output pressure value.

6. The method according to claim 5, wherein the current operating condition of the engine is determined in the following way:
if it is determined that the current torque of the engine is larger than a preset torque, then determining that the engine is currently in the high load operating condition; and
if it is determined that the current torque of the engine is not larger than the preset torque, then determining that the engine is currently in the low load operating condition.

7. An electronic device, **characterized by** comprising:
at least one processor (501); and a memory (502) in communication with the at least one processor (501); wherein the memory (502) stores instructions that can be executed by the at least one processor (501), and the instructions are executed by the at least one processor (501) so that the at least one processor (501) performs the method according to any one of claims 1 to 6.

8. A vehicle, **characterized by** comprising the electronic device according to claim 7.

9. A computer storage medium, **characterized in that** the computer storage medium stores a computer program for causing a computer to perform the method according to any one of claims 1 to 6.

10. A computer program product comprising a computer program, **characterized in that** when the computer program is executed by a processor (501), it implements the method according to any one of claims 1 to 6.
